# EUROPEAN PATENT APPLICATION

(11) **EP 2 747 378 A1**
(43) Date of publication of application: **25.06.2014**
(21) Application number: 12199151.7
(22) Date of filing: 21.12.2012
(51) Int. Cl.: H04L 29/08, H04W 4/02

(54) **Method for generating an affective status map**

(71) Applicant: Deutsche Telekom AG, 53113 Bonn (DE); Technische Universität Berlin, 10623 Berlin (DE)
(72) Inventor: The designation of the inventor has not yet been filed
(74) Representative: Vossius & Partner

(57) **Abstract**

The present invention relates to a method for generating a status map and comprises the following steps: identifying an icon relating to an affective status of a user of a mobile phone, and correlating the icon with the present location of the mobile phone. The method particularly collects data relating to the affective status of a plurality of users of a plurality of mobile phones in a database, particularly without correlating the data relating to the affective status with data concerning an identification of the users. The present invention is also related to the use of a status map generated according to the method as defined above to control the sending of advertisement to the mobile phone. The icon may be an emoticon identified in a text message, or the map may be provided with such icons for describing a mood of a user at a location.

## Description

The present invention relates to a method for generating an affective status map. In particular, a map can be provided with icons for describing an emotional situation and/or mood of a user of a mobile device, e.g. a mobile phone.

Presently there are some platforms collecting comments of several users in the form text, for example, in order to provide ratings for particular locations, e.g. Qype.

However, it is required for all of these platforms that the user enters personal information to login, and this personal information may be considered as not being safe. Therefore, many users of mobile devices do not want to contribute to provide such data. A further disadvantage is that the user considers the input of textual data as inconvenient and time-consuming for providing, for example, a rating of a certain location. Moreover, it is difficult to provide a map for describing the affective status of users based on textual data usually provided by the users in the form of several sentences explaining their impression about the location.

In view of the above, the object underlying the present invention is to provide a simple, quick and convenient approach for gathering affective status information of one or more users related to locations using mobile devices.

These objects are achieved with the features of the present invention.

The concept behind the present invention is to provide a map with icons for describing a situation, an affective status, and/or the mood of a user of a mobile device, particularly without the need of any identification of the user.

In particular, the present invention relates to a method for generating a status map. The method comprises a step of identifying an icon relating to an affective status of a user of a mobile phone, and further comprises the step of correlating the icon with the present location of the mobile phone.

A status map is, for example, an environmental map based on the present location of the user (and/or of his mobile device), e.g. a map of a state or a city or a particular area of a city, wherein the map is provided with information concerning the status of a user of a mobile phone. For example, the status of a user can be his affective status, e.g. his mood, a particular emotional situation, and/or an impression he got, for example, from a certain location.

An icon may be a multidimensional compact representation from which the affective status of the user can preferably be easy recognized. In contrast to textual data, an icon is not formed of a logical sequence of words, and particularly not formed of words at all. In an embodiment, the icon is a well-recognized symbol, for example an emoticon, particularly one or more (particularly different) "smileys". A smiley is a schematical graphical representation of a facial expression, e.g. a happy face, a crying face, a sleeping face and so on.

By using icons in a map of, for example, a particular area of a city, an easily ("at a first glance") recognizable status map of the user can be generated which gathers the user's status information relating to certain locations in the city area.

In particular, first of all, the appropriate icon (for example, a happy smiley) representing the affective status of the user is identified and then correlated with the location of the user. The location of the user may be the location of the mobile device the user carries with him, for example, obtained on the basis of GPS ("Global Positioning System") and/or cell tower information. In doing so, the identified icon can be linked to the present location of the user in order to start generating or supplementing the status map. In particular, the status map is a (usual) map additionally comprising at least one icon at a certain/particular location.

In an embodiment, the method according to the invention can be carried out by means of an application ("app") for mobile devices, which can be downloaded by the user. According to the present invention, it may not be necessary for the user to submit any personal data while the method of the invention is carried out. For example, as soon as the app is installed in the mobile device, an anonymous ID may be generated, for example, the device ID is mixed with a random number. In doing so, the user is made anonymous, but - at the same time - any misuse resulting, for example, from multiple user votings can be avoided, since a single instance of the application is identified by the generated anonymous ID.

In an embodiment, the icon is correlated with the point in time at which the icon is identified. In doing so, the status map can be evaluated depending on particular dayparts. For example, the affective status of a user at a certain location might be different in the morning compared to his mood in the evening at this location. Hence, different status maps may be generated depending on the dayparts and/or one "overall" status map may be created showing all icons for a particular location and/or showing an icon representing an average of all icons identified for this particular location.

In an embodiment, the identifying step comprises a user input in the mobile device, particularly a one click user input. For example, the user can click on one icon in order to contribute the information about his affective status to generate the status map. In an embodiment, the user may choose between several different icons shown on the display of his mobile device. After the user has chosen (identified) the icon matching with his present affective status, the icon is then correlated to the location of the user (for example, the location of the mobile device or a location, e.g. an address, input by the user in the mobile device and to be linked to the identified icon).

In an embodiment, the identifying step additionally or alternatively comprises analyzing data available in the mobile phone. That means that additionally or alternatively to a user input, a status map may also be generated on the basis of other sources of data available in a mobile device. For example, a mobile device is equipped with many means that can be used for capturing an affective status of the user of the mobile device.

In an embodiment, the data available in the mobile phone comprises speech data. Then, for example, the speech data may be analyzed to identify the icon relating to the affective status of the user. Such an analyzing step may then comprise an analysis of the content of a speech conversation during at least one telephone call and/or the content of speech dictated by the user by using his mobile device.

In an embodiment, the analyzing of speech data comprises analyzing prosodic information, for example, in a speech conversation during at least one telephone call and/or in a dictated speech to be stored in the mobile device. For example, recognition of emotions in speech may be based on pitch, timing and voice quality. For instance, happiness may cause the mean pitch of an utterance to be higher than in calm sentences. In an embodiment, the intonation of a user is analyzed on the basis of the pitch and the intensity of the speech. For example, statistical measures of parameters such as mean, median over time, and/or variance may also be taken into account. Then, for example, after extracting particular features from the speech, a statistical model can be created for different classes of affective status, e.g. different emotions, based on the obtained features. In an embodiment, neural networks and support vector machines may be used as statistical model for this purpose. Once the statistical models are created, the classification of (parts of) the speech, for example, of voice segments/fragments, into certain emotional classes can be handled by the statistical model.

In particular, since voice data captured by a mobile device can be subject to ambient noise, a pre-processing can be carried out in connection with the speech analysis, for example, by using a second microphone integrated in the mobile device for ambient noise cancellation.

In an embodiment, the data available in the mobile phone comprises motion data, particularly obtained by an accelerometer and/or a gyroscope embedded in the mobile phone. Since mobile phones are usually carried with the user, the motion of the mobile device can be an indicator of the user's movements as well. Therefore, units such as an accelerator and/or a gyroscope in the mobile device can provide information about the motion of the user of the mobile device. For example, the pattern of motion can be an indicator of a certain context, or a certain affective or emotional status of the user. For instance, detecting rapid changes in the pattern of the signals captured by the accelerometer and/or gyroscope for a long period of time can be an indicator of the fact that the user is under stress. Additionally or alternatively, the motion pattern obtained by using the signals of the accelerometer and/or the gyroscope can also be used to recognize a current physical activity of the user which can then be correlated with his affective status.

In an embodiment, the data available in the mobile phone comprises text message data. For example, one or more icons used in a text message may be extracted during analyzing the data available in the mobile device. Additionally or alternatively, the content of the text message sent or received by the user via his mobile device can be an indicator of the affective status of the user. In an embodiment, the analyzing of the text message data comprises a data mining step based on certain words and/or phrases and whether these words and/or phrases are used in the text message.

In an embodiment, the data available in the mobile phone comprises data relating to the use of the mobile phone by the user. For example, the way the mobile device is used by the user can be an indicator of the affective status of the user. For instance, if the user repeatedly changes or moves between different applications in his mobile phone, this situation can be an indication of stress. Additionally or alternatively, if the user is spending a long time listening to music or playing a game on his mobile device, this situation can be an indication of a relaxed or happy mood of the user.

In an embodiment, the method comprises a step of collecting data relating to the affective status of a plurality of users of a plurality of mobile phones in a database, particularly without correlating the data relating to the affective status with data concerning an identification of the users.

For example, each user having downloaded the respective app for his mobile device can decide whether a status map only for his own status at particular locations is generated on his mobile device and/or whether he makes any contribution to a status map taking the affective status of other users of mobile devices into consideration to generate a status map, e.g. for a particular area of a city. In the latter case, data or input from many users are collected and/or analyzed, and then correlated to the respective location (and optionally time) at which the data was identified as relating to an affective status of a user. The data (particularly the icon) relating to the affective status of a user at a certain location can be collected in a database, for example a remote database, storing the data relating to affective status of all users making a contribution to generate the status map.

The status map generated by carrying out any of the above described methods is advantageous because it provides a first glance information about different locations. Further, contribution for a user is very simple and may be anonymous as explained above. The discussed concept provides the opportunity of collecting a massive amount of data without neglecting the privacy standards usually demanded or desired by users.

In general, data mining can be used in accordance with the present invention, for example, to analyze data available in the mobile device (e.g. mobile phone) of the user. In particular, the data mining can be performed on the basis of certain patterns of data segments/fragments relating to speech data and/or motion data and/or text data and/or device use data available in the mobile device.

The present invention is also directed to the use of a status map generated according to the method of the present invention and as additionally or alternatively described in any of the above-indicated embodiments to control the sending of advertisement to the mobile phone. For example, knowing how an individual, a part of society, or people living in a geographical location, for example, a particular area of a city, feel over time can be useful for effectively directing advertisements to the mobile device of the user.

In an example, the information provided by the generated status map may be used in several different contexts such as advertising, healthcare, promotion, enhancing the user interface of mobile devices, etc. In an embodiment, certain advertisements can be sent only to happy and/or busy and/or stressed people, and/or to mobile devices present at the respective locations correlated to such affective status.

Such a concept may be useful for governments and social institutes, for example, if planning social developments, social behavior, and related phenomena for a particular city area. Further, consulting companies may be guided in their decision of making process regarding initiation of a business in a certain location, for example, opening a restaurant, bar, or a medical center.

A further advantageous aspect is that the information captured by a mobile device as described above can also be used to monitor the physical and/or mental health issues related to the user. For example, many health issues can be especially reflected in the pattern of voice and motion of the user. Since the present invention can also provide a link between these factors and the related location, it can further assist in finding the cause of a certain health problem.

In an embodiment, the concept behind the present invention can be achieved by providing a first component presenting an app instance of the user's mobile device as explained above. For example, an anonymous ID is generated. Of course, it may be possible that the user registers not to be anonymous. Further, a second component may be a server for message collection and data mining. In particular, the second component comprises two subcomponents: the first sub-component collects data, and the second sub-component analyzes the data, for example, for data mining, performs the data mining, and may carry out a statistical interpretation of the results. A third component may be a location detector and assigner to search for all data/icons relating to an affective status of a user in a particular location. A fourth component may be adapted to interpret the status map and to categorize particular locations within the status map, for example, to find related available advertising. Further, the fourth component may be adapted to filter any available advertising, for example, based on a user's preference list input into the mobile device and/or a remote database before, and then send only specific advertising to his mobile device. Optionally, a fifth component may be provided, for example, for sending anonymous or personalized messages/recommendations to other users if the involved users had allowed to receive such messages/recommendations from other users. For example, these messages/recommendations may automatically be sent to a mobile device of a user when the user is at a certain location linked to the message/recommendation. Of course, message/recommendation filters may be provided depending on the user's profile, in order to avoid any misuse. Further, optionally, a sixth component may be provided to analyze any available information in connection with the affective status of the user of a mobile device. In particular, the analyzing may be based on the specific use case as discussed above, for example, advertisement, healthcare, social information, etc..

Features of particular embodiments and considerations in connection with the present invention are discussed in the following.

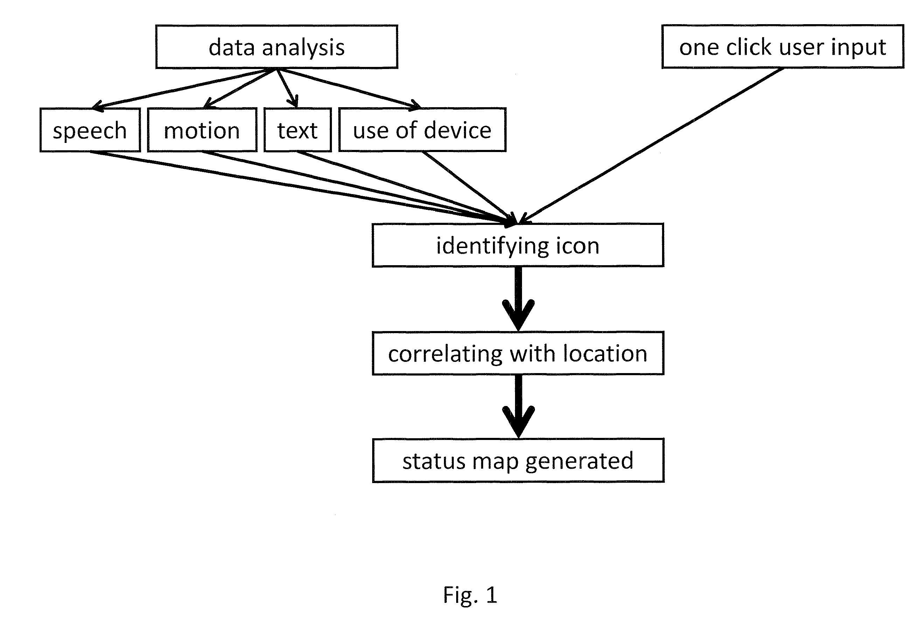

Fig. 1 shows a diagram illustrating a concept behind the present application.

In particular, Fig. 1 schematically shows the two main steps if carrying out the method of the present application. For example, first of all, an icon relating to the affective status of a user of a mobile phone is identified. This identification can be realized, for example, by analyzing data available in the mobile phone.

Data available in a mobile device can be, for example, speech data, motion data, text data, and/or data relating to the user of the device as shown in Fig. 1. Speech data can be data extracted/obtained from a speech conversation, for example, during a telephone call or from a dictated file on the mobile device. Motion data may be data obtained from one or more sensor units embedded in the mobile phone, for example, an accelerator and/or a gyroscope. Text data available in the mobile phone can be data extracted/obtained from messages sent from and/or received by the mobile phone. Data relating to the use of the mobile device may be data describing whether the user quickly changes applications, for example, because he is under stress, or whether the user is relaxed because he is listening to music for a long time period.

An analysis carried out to the data available in the mobile device may be based, for example, on data mining. Data mining can be performed, for example, by using pre-defined patterns of data fragments of the data available in the mobile device.

Additionally or alternatively to the analyzing of data available in the mobile device, the step of identifying an icon relating to the affective status of the user of the mobile device may be carried out by a one click user input. That means that the user of the mobile device identifies the icon by directly deciding which icon should be used to be correlated with the location on a map.

After identification of an icon by data analysis and/or by a one click user input, the icon is correlated with the present location of the mobile device. The present location may be obtained from GPS and/or cell tower information. By correlating/linking the identified icon with/to the present location of the mobile phone (which is considered as being the present location of the user of the mobile device), a status map can be generated reflecting the user's affective status/mood at a particular location. In an embodiment, a status map may be generated by correlating not only the identified icons from one single user, but from a plurality of users with particular locations. Additionally or alternatively, the one click user inputs of each of the plurality of users and/or the data available in the mobile devices of the plurality of users may be analyzed before identifying one single (mean) icon to be correlated with the particular location. In doing so, a status map is generated reflecting the impressions of many users in view of particular locations.

The status map generated according to any of the above-indicated embodiments can then, for example, be used to optimize strategies regarding advertisement, social aspects, business scenarios and/or healthcare services.

While the invention has been illustrated and described in detail in the drawing and foregoing description, such illustration and description are to be considered illustrative or exemplary and non-restrictive. The invention is thus not limited to the disclosed embodiments. Variations to the disclosed embodiments can be understood and effected by those skilled in the art and practicing the claimed invention, from a study of the drawing, the disclosure, and the appended claims. In the claims, the word 'comprising' does not exclude other elements or steps, and the indefinite article 'a' or 'an' does not exclude a plurality. A single processor or other unit may fulfill the functions of several items recited in the claims. The mere fact that certain measures are recited in mutually different dependent claims does not indicate that a combination of these measures cannot be used to advantage.

## Claims

1. Method for generating a status map, comprising:
identifying an icon relating to an affective status of a user of a mobile phone, and
correlating the icon with the present location of the mobile phone.

2. Method of claim 1, wherein an environmental map is provided based on the present location of the mobile phone.

3. Method of claim 1 or 2, wherein the location of the mobile phone is obtained from GPS or cell tower information.

4. Method of claim 1, 2, or 3, wherein the icon is correlated with the point in time at which the icon is identified.

5. Method of any of claims 1-4, wherein the identifying step comprises a user input in the mobile phone, particularly a one click user input.

6. Method of any of claims 1-5, wherein the identifying step comprises analyzing data available in the mobile phone.

7. Method of claim 6, wherein the data available in the mobile phone comprises speech data.

8. Method of claim 7, wherein the analyzing of speech data comprises analyzing of a content of a speech conversation during at least one telephone call.

9. Method of claim 7 or 8, wherein the analyzing of speech data comprises analyzing of prosodic information.

10. Method of any of claims 6-9, wherein the data available in the mobile phone comprises motion data, particularly obtained by an accelerometer and/or a gyroscope in the mobile phone.

11. Method of any of claims 6-10, wherein the data available in the mobile phone comprises text message data.

12. Method of claim 11, wherein the analyzing of the text message data comprises a data mining step based on certain words and/or phrases and if these words and /or phrases are used in the text message.

13. Method of any of claims 6-12, wherein the data available in the mobile phone comprises data relating to the use of the mobile phone by the user.

14. Method of any of the preceding claims, comprising:
collecting data relating to the affective status of a plurality of users of a plurality of mobile phones in a database, particularly without correlating the data relating to the affective status with data concerning an identification of the users.

15. Use of a status map generated according to the method of any one of the preceding claims to control the sending of advertisement to the mobile phone.
